# EUROPEAN PATENT APPLICATION

(11) **EP 4 832 021 A1**
(43) Date of publication of application: **28.10.2026**
(21) Application number: 24907653.0
(22) Date of filing: 25.07.2024
(51) Int. Cl.: H01B 12/10, C22C 9/00, C22C 13/00

(54) **PRECURSOR FOR MANUFACTURING SUPERCONDUCTING WIRE AND SUPERCONDUCTING WIRE USING SAME**

(30) Priority: 18.12.2023 KR 20230184682; 18.12.2023 KR 20240091503
(71) Applicant: K. A. T. Co., Ltd, Yuseong-gu Daejeon 34026 (KR)
(72) Inventor: JE, Sanghyeun, Daejeon 34020 (KR); SHIN, Iksang, Sejong 30150 (KR); KIM, Youngkyoung, Daejeon 34034 (KR); IM, Jaeduk, Daejeon 34049 (KR); YOU, Seongtaek, Daejeon 34050 (KR); KIM, Heonhwan, Daejeon 35314 (KR)
(74) Representative: Savi, Massimiliano
(86) International application number: PCT/KR2024/010821
(87) International publication number: WO 2025/135366

(57) **Abstract**

The present disclosure relates to a precursor for a superconducting wire and a superconducting wire using the precursor to further improve superconducting performance such as high critical current density, etc., wherein the precursor includes a first Cu tube and a plurality of sub-elements stacked in the first Cu tube, and the sub-element is formed by alternately stacking, in a second Cu tube, an Nb wire including Nb or an Nb alloy and an Sn wire including Sn or an Sn alloy.

## Description

### Technical Field

The present disclosure relates to a precursor for a superconducting wire and a superconducting wire using the precursor, and more particularly, to a precursor for a superconducting wire and a superconducting wire using the precursor to improve superconducting properties and enhance thermo-magnetic stability through structural improvements.

### Background Art

Since the discovery of superconductivity, research into the superconductivity of alloys and compounds has continued together with the discovery of type-II superconductors, resulting in significant technological advancements in the development of superconducting wires using Nb₃Sn, NbTi, etc.

Nevertheless, the current superconducting wire market is seeing a growing demand for superconducting wires with improved critical current characteristics, in line with the demand for high magnetic field magnets.

However, despite continuous technological improvements, conventional high-performance superconducting wires are still insufficient for sufficient mechanical and superconducting properties.

A related technology is described in Korean Patent Gazette No. 10-01847880 (published on May 24, 2018).

### Disclosure of Invention

### Technical Problem

The present disclosure has been provided to address the aforementioned problems, and the present disclosure provides a precursor for a superconducting wire and a superconducting wire using the precursor to further improve superconducting performance and stability through structural improvements, thereby achieving a high critical current density and enabling stable current flow even in a low magnetic field region. **Solution to Problem**

According to an aspect of the present disclosure, a precursor for a superconducting wire includes a first Cu tube and a plurality of sub-elements stacked in the first Cu tube, in which the sub-element is formed by alternately stacking, in a second Cu tube, an Nb wire including Nb or an Nb alloy and an Sn wire including Sn or an Sn alloy.

The Nb wire may be arranged in a honeycomb structure around the Sn wire.

The Nb wire may include a third Cu tube and a plurality of Nb filaments including Nb or an Nb alloy in the third Cu tube.

A thermal stabilization barrier layer may be provided between the second Cu tube in the sub-element and an alternately stacked portion of the Nb wire and the Sn wire, and an area of the thermal stabilization barrier layer may be 5 to 25 % of a total area of the sub-element, and an area of the second Cu tube may be 15 to 40 % of the total area of the sub-element.

Furthermore, a Cu core portion may be further installed at the center of a stack of the plurality of sub-elements in the first Cu tube, and the Cu core portion may occupy 5 to 25 % of a total area of the precursor.

A superconducting wire using the precursor for the superconducting wire according to any one of claims 1 to 4.

### Advantageous Effects of Invention

Through the problem-solving means described above, a precursor for a superconducting wire and the superconducting wire using the precursor according to the present disclosure may have various advantages of improving mechanical and superconducting properties of the wire by ensuring uniform diffusion of Sn and thermal stability through wire structural improvements.

### Brief Description of Drawings

FIG. 1 is a cross-sectional view showing an example of a superconducting wire precursor according to the present disclosure.
FIG. 2 is a cross-sectional view showing another example of a superconducting wire precursor according to the present disclosure.
FIG. 3 is a cross-sectional view showing yet another example of a superconducting wire precursor according to the present disclosure.
FIG. 4 is a picture showing a cross-section of a superconducting wire using a superconducting wire precursor according to the present disclosure.

### [Description of Reference Numerals]

| | | | |
|---|---|---|---|
| 10: | First Cu Tube | | |
| 20: | Sub-element | | |
| 21: | Nb Wire | 22: | Sn Wire |
| 24: | Third Cu Tube | 25: | Sn Rod |
| 26: | Nb Filament | 26': | Fourth Cu Tube |
| 27: | Diffusion Barrier Layer | | |
| 28: | Thermal Stabilization Barrier Layer | | |
| 30: | Second Cu Tube | | |
| 40: | Cu Core Portion | | |

### Mode for the Invention

A preferred embodiment of a precursor for a superconducting wire and the superconducting wire using the precursor according to the present disclosure will be described in detail with reference to the accompanying drawings.

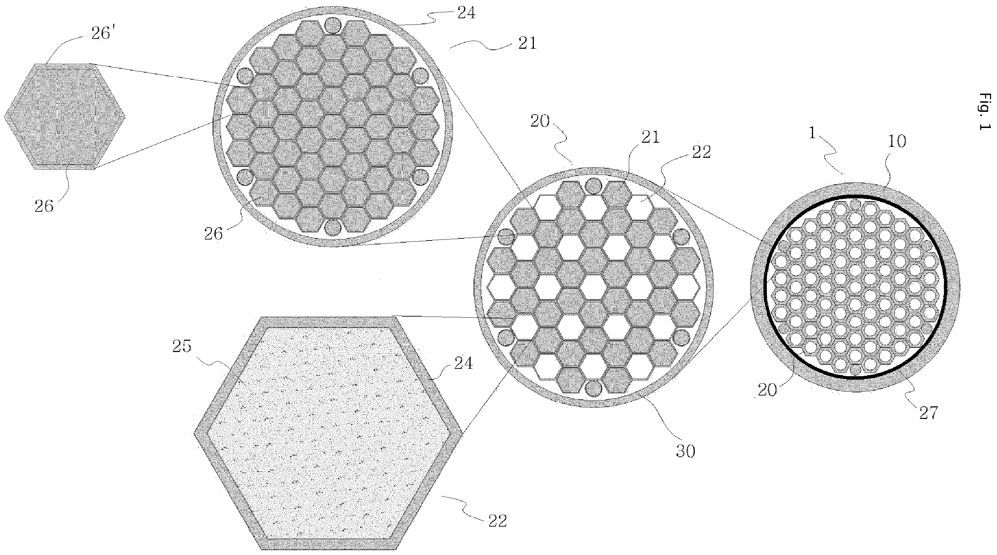

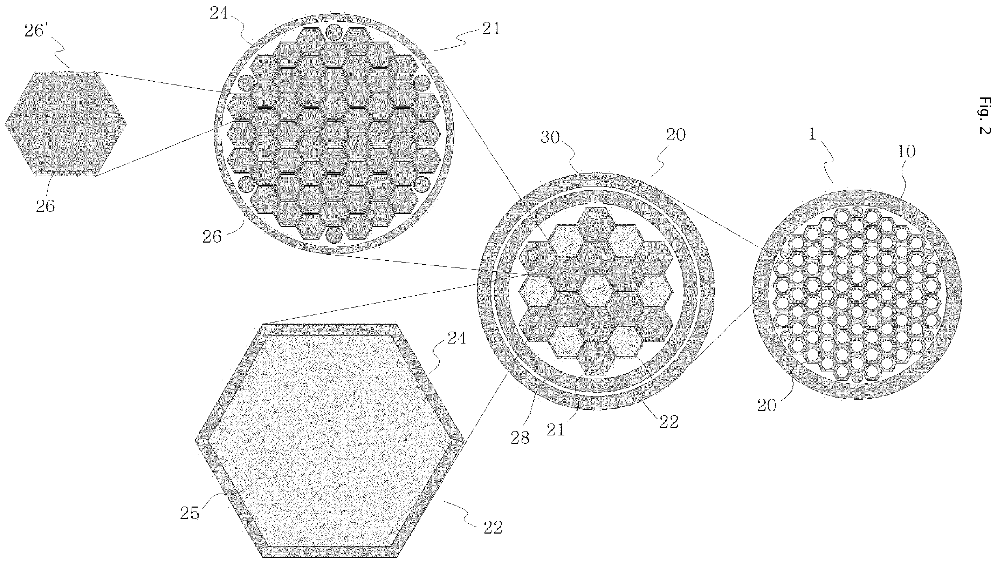

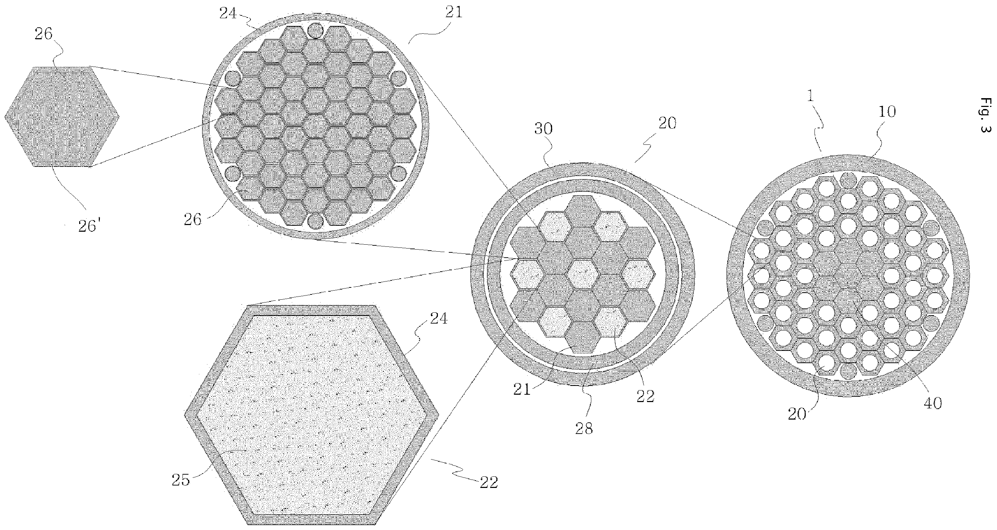

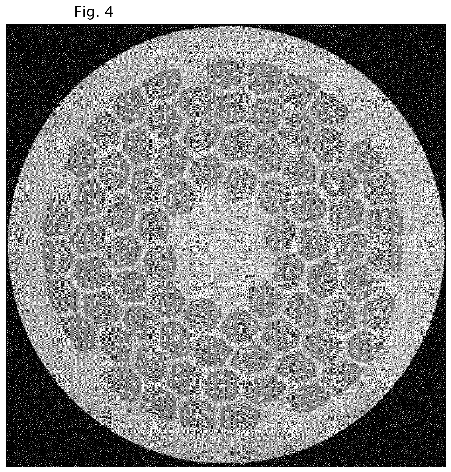

FIG. 1 is a cross-sectional view showing an example of a superconducting wire precursor according to the present disclosure, FIG. 2 is a cross-sectional view showing another example of a superconducting wire precursor according to the present disclosure, FIG. 3 is a cross-sectional view showing yet another example of a superconducting wire precursor according to the present disclosure, and FIG. 4 is a picture showing a cross-section of a superconducting wire using a superconducting wire precursor according to the present disclosure.

As shown in FIG. 1, a precursor for a superconducting wire according to the present disclosure may include a first Cu tube 10 installed on an outer side thereof and a plurality of sub-elements 20 stacked in the first Cu tube 10, in which the sub-element 20 may be formed by alternately stacking an Nb wire 21 including Nb or an Nb alloy and an Sn wire 22 including Sn or an Sn alloy inside the second Cu tube 30.

Through heat treatment, Sn present in the Sn wire 22 may diffuse to the Nb wire 21 to react with Nb, thus forming a superconductor, Nb₃Sn.

Furthermore, a diffusion barrier layer 27 including Nb, Ta, etc., to prevent further outward diffusion of Sn may be provided between the first Cu tube 10 and the plurality of sub-elements 20 stacked in the first Cu tube 10.

The Nb wire 21 may be arranged in a honeycomb structure around the Sn wire 22 to ensure that Sn diffuses uniformly in all directions.

Specifically, in the present disclosure, the Sn wire 22 may include a third Cu tube 24 and an Sn rod 25 including Sn or an Sn alloy in the third Cu tube 24, and the Nb wire 21 may include the third Cu tube 24 and a plurality of Nb filaments 26 including Nb or an Nb alloy in the third Cu tube 24.

Each Nb filament 26 may be positioned in a fourth Cu tube 26'.

As such, by forming the plurality of Nb filaments 26 in the sub-element 20, more uniform diffusion of Sn may be achieved, shortening a heat treatment time by reducing a diffusion distance.

As an application example, as shown in FIG. 2, in the present disclosure, the second Cu tube 30 in the sub-element 20 may include oxygen-free copper (OFC), and a thermal stabilization barrier layer 28 may be provided between a second Cu tube 30 and a mixed stack of the Nb wire 21 and the Sn wire 22.

Here, the thermal stabilization barrier layer 28 including Nb, Ta, NbTi, etc., may prevent Sn from diffusing outward, and as a result, the OFC connecting outer peripheral portions (edge portions) of the plurality of sub-elements 20 may be positioned after heat treatment, thereby strengthening thermal stability and improving superconducting properties, such as an increase in a critical current I_{c} and a reduction in hysteresis loss Qh.

An area of the thermal stabilization barrier layer 28 may be 5 to 25 % of a total area of the sub-element 20, and an area of the second Cu tube 30 may be 15 to 40 % of the total area of the sub-element 20, and this is because for below 15 %, it is difficult to expect sufficient heat diffusion, conversely, for over 40%, a superconductor area decreases, which is unfavorable to superconducting properties.

Furthermore, as shown in FIG. 3, the present disclosure may include a Cu core portion 40 installed at the center of a stack of the plurality of sub-elements 20 in the first Cu tube 10.

This may minimize the occurrence of excessive stress at the center of the wire during a drawing process and, consequently, minimize wire breakage.

The Cu core portion 40 may preferably include 5 to 25 % of the total precursor area.

FIG. 4 shows a cross-section of a superconducting wire manufactured from the superconducting wire precursor shown in the embodiment of FIG. 3 through processing such as heat treatment.

Through the structure described above, the precursor for the superconducting wire and the superconducting wire using the precursor according to the present disclosure may have various advantages of improving mechanical and superconducting properties of the wire by ensuring uniform diffusion of Sn and thermal stability through wire structural improvements.

### Industrial Applicability

The present disclosure relates to a superconducting wire and has industrial applicability.

## Claims

1. A precursor for a superconducting wire, comprising:
a first Cu tube; and
a plurality of sub-elements stacked in the first Cu tube,
wherein the sub-element is formed by alternately stacking, in a second Cu tube, an Nb wire comprising Nb or an Nb alloy and an Sn wire comprising
Sn or an Sn alloy.

2. The precursor of claim 1, wherein the Nb wire is arranged in a honeycomb structure around the Sn wire.

3. The precursor of claim 2, wherein the Nb wire comprises:
a third Cu tube; and
a plurality of Nb filaments comprising Nb or an Nb alloy in the third Cu tube.

4. A superconducting wire using the precursor for the superconducting wire according to any one of claims 1 to 4.
